# FASCICULE DE BREVET EUROPEEN

(11) **EP 2 533 391 B1**
(45) Date de publication et mention de la délivrance du brevet: **20.09.2017**
(21) Numéro de dépôt: 12169295.8
(22) Date de dépôt: 24.05.2012
(51) Int. Cl.: H02J 3/28, H02J 3/34, H02J 3/46, H02J 9/06, H02B 1/28

(54) **Système de gestion multi-sources de générateurs électriques**
Multi-Source-Steuerungssystem von Stromgeneratoren
Multi-source management system of electrical generators

(30) Priorité: 06.06.2011 FR 1154870
(43) Date de publication de la demande: 12.12.2012
(73) Titulaire: Schneider Electric Industries SAS, 92500 Rueil-Malmaison (FR)
(72) Inventeur: Tarbouriech, Laurent, 38380 Saint-Laurent-du-Pont (FR)
(74) Mandataire: Dufresne, Thierry

(56) Documents cités:
- DE-A1- 4 232 516
- DE-U1- 20 002 237
- DE-U1-202010 001 742

## Description

### Domaine technique de l'invention

La présente invention se rapporte à un système pour réaliser le raccordement de sources d'énergie électrique diverses, renouvelables et / ou conventionnelles, ainsi que le stockage d'énergie sur une ou plusieurs batteries, en vue d'alimenter des charges locales sur un réseau domestique. Le système selon l'invention fonctionne en la présence ou en l'absence d'un réseau public d'électricité. De plus, le système selon l'invention a la capacité de retourner de l'énergie électrique au réseau public quelles que soient les sources d'énergie électrique locales utilisées.

L'invention a également pour objet de présenter un coffret étanche pour mettre en oeuvre le système décrit ci-dessus et pouvant être installé à l'intérieur comme à l'extérieur d'un bâtiment alimenté par le réseau domestique.

### Etat de la technique

L'état de la technique divulgue de nombreux systèmes pour multiplexer différentes sources d'énergie sur un réseau public ou local. Par leur complexité, leurs interfaces propriétaires ou leur incapacité à fonctionner en la présence comme en l'absence d'un réseau publique d'électricité les alimentant, ces systèmes ne sont pas satisfaisants.

Pour illustrer cet état de la technique constituant l'arrière-plan technologique ayant trait à la présente invention, on se réfère par exemple aux demandes de brevets et brevets suivants : DE4232516, WO03077398, JP10174312 ou encore US2005/0200133.

Ces documents présentent des systèmes souvent propriétaires et donc peu ou pas évolutifs. Avec de tels systèmes, dans le cas d'une intégration de matériels pour le raccordement de plusieurs sources et de leur gestion, la multiplicité d'origines des appareils impose dans la plupart des cas la création de multiples coffrets et tableaux. Des difficultés apparaissent alors en termes de temps de main d'oeuvre pour le montage, de coût et d'encombrement.

L'installateur de ces systèmes peut se trouver confronté alors à des problèmes d'incompatibilité entre les différentes offres disponibles sur le marché.

Du fait de ces difficultés d'intégration matérielle et fonctionnelle, l'installateur ne peut pas en général offrir à l'utilisateur un fonctionnement totalement automatisé du système global. Cela oblige l'utilisateur à participer régulièrement au fonctionnement du système en adaptant manuellement l'état de son système. Ces opérations peuvent devenir suffisamment complexes pour que l'utilisateur se trouve dans l'incapacité d'agir.

Par ailleurs, dans les systèmes connus, notamment dans celui décrit dans US2005/0200133, l'architecture retenue impose une tension continue commune à tous les convertisseurs des différentes sources de courant, cette tension continue étant commune avec la batterie du convertisseur réversible injectant l'énergie électrique sur le réseau. Cette architecture est problématique car il n'est pas possible de prévoir tous les cas de raccordement possibles de sources, ce qui peut empêcher de faire évoluer l'installation.

Par ailleurs, les systèmes actuels ne permettent pas, bien qu'étant raccordés au réseau public, d'injecter de l'énergie en provenance de batteries de secours intégrées au système vers ce même réseau public.

Le but de l'invention est donc de proposer un système permettant de connecter directement sur un micro-réseau destiné à alimenter un réseau domestique des sources d'énergie de différentes origines reliées à des convertisseurs standards. Le système selon l'invention a pour objectif d'être d'intégration facile et présente de préférence des interfaces de communication permettant sa supervision et son contrôle à distance.

On identifiera enfin le document DE 200 02 237 U1 qui décrit un système multi-sources selon le préambule de la revendication indépendante 1.

### Exposé de l'invention

Ce but est atteint par un système de multiplexage d'énergie électrique issue d'une pluralité de générateurs électriques, ledit système étant interconnecté avec interconnecté avec un réseau public d'électricité, et comprenant un convertisseur réversible connecté à au moins une batterie, ledit convertisseur réversible étant directement interconnecté avec un bus de puissance commun et chacun desdits générateurs électriques étant connecté audit bus de puissance commun au travers d'un organe de coupure et d'un organe de mesure, respectivement via un convertisseur adéquat, le bus de puissance commun, la pluralité de générateurs électriques et le convertisseur réversible formant un micro-réseau alimentant un réseau domestique consommateur d'énergie électrique, le système comprenant également un automate de gestion dans le système selon l'invention, en cas de disponibilité du réseau public d'électricité, le niveau de tension et la fréquence du bus de puissance commun du micro-réseau sont fixés par ledit réseau public d'électricité comme étant égaux au niveau de tension et à la fréquence de l'énergie électrique issue du réseau public d'électricité ; et en cas d'indisponibilité du réseau public d'électricité, le niveau de tension et la fréquence du bus de puissance commun du micro-réseau sont fixés par ledit convertisseur réversible connecté à la au moins une batterie, et l'automate contrôle les organes de coupure et les organes de mesure des générateurs électriques de façon à maintenir la tension et la fréquence du bus de puissance commun. Avantageusement, la au moins une batterie, via ledit convertisseur réversible, est apte à injecter de l'énergie électrique sur le réseau public d'électricité.

Avantageusement, le bus de puissance commun présente des caractéristiques électriques standards conformes aux normes locales.

Selon un mode de réalisation, le système selon l'invention est raccordé à un réseau domestique consommateur d'énergie électrique par l'intermédiaire d'un tableau de protection électrique.

Selon un mode de réalisation, le système selon l'invention comporte un organe déporté de mesure et de contrôle situé au niveau du tableau de protection électrique, pour mesurer et communiquer à l'automate la consommation requise par le réseau domestique.

L'invention concerne également un coffret comprenant :
- des premiers moyens de raccordement au réseau public d'électricité,
- des seconds moyens de raccordement à une pluralité de générateurs électriques ;
- des troisièmes moyens de raccordement à un tableau de protection électrique alimentant un réseau domestique consommateur d'énergie électrique ;
- un convertisseur réversible doté d'au moins une batterie ;
- un bus de puissance commun interconnecté avec les premiers, seconds et troisièmes moyens de raccordement, et avec le convertisseur réversible ;
- un automate connecté audit convertisseur réversible et aux générateurs électriques, et comprenant des moyens de communication avec l'extérieur ;
ledit coffret étant configuré pour mettre en oeuvre le système selon l'invention.

Avantageusement, le coffret selon l'invention comprend un capot étanche pour protéger les premiers, seconds et troisièmes moyens de raccordement, le convertisseur réversible doté d'au moins une batterie et l'automate.

Avantageusement, un ensemble de coffrets conformes à l'invention peuvent être installés en série. L'invention est définie par les caractéristiques de la revendication indépendante. Les modes de réalisations préférés sont définis par les revendications dépendantes.

### Brève description des figures

D'autres caractéristiques et avantages vont apparaître dans la description détaillée qui suit faite en regard des dessins annexés qui représentent :
- la figure 1 : une représentation schématique d'un exemple d'architecture basique connue de système de raccordement multi-sources à un réseau d'électricité ;
- la figure 2 : une représentation schématique du principe d'architecture du système selon l'invention ;
- la figure 3 : une représentation schématique d'un mode de réalisation du système selon l'invention.

### Description détaillée d'au moins un mode de réalisation

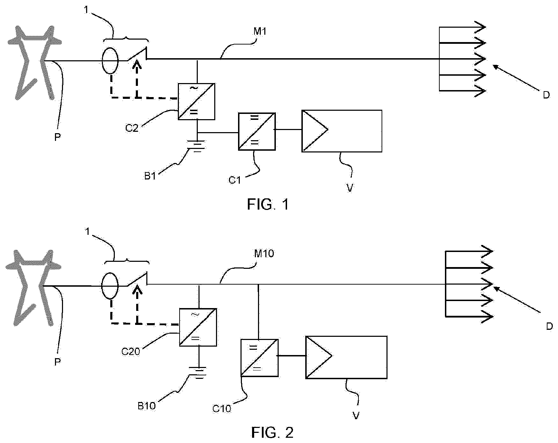

La figure 1 représente un schéma simple d'un exemple d'architecture connue de système de gestion du raccordement de sources d'énergie électrique potentiellement multiples, et notamment issue de générateurs électriques V fonctionnant à partir d'énergies renouvelables, à un micro-réseau d'électricité local destiné à alimenter un réseau domestique.

Sur l'exemple d'architecture représenté, un micro-réseau est connecté par des moyens de raccordement 1 à un réseau public d'électricité P. Ce micro-réseau est destiné à participer à l'alimentation d'un réseau domestique consommateur d'énergie via les départs D.

Un générateur photovoltaïque V constitue une source d'énergie apte à alimenter le bus de puissance M1 du micro-réseau. Comme cela est connu, l'électricité produite par le générateur photovoltaïque V passe par un convertisseur continu / continu C1 afin d'en augmenter le niveau de tension. Selon l'état de la technique représenté à la figure 1, le niveau de tension en sortie du convertisseur continu / continu C1 est imposé par le niveau de tension du bus d'au moins une batterie B1 associée à un convertisseur continu / alternatif C2 qui alimente le bus de puissance M1 du micro-réseau.

Comme cela a déjà été indiqué précédemment, l'inconvénient de ce type d'architecture réside dans le fait que tout générateur électrique supplémentaire, photovoltaïque ou autre, devra être relié, via un convertisseur, au même bus continu dont le niveau de tension est imposé par la au moins une batterie B1. Cela impose que le raccordement dudit générateur électrique supplémentaire ait été prévu dès l'origine par le constructeur.

La figure 2 correspond au schéma de principe du système selon l'invention. L'idée est que le convertisseur C20 doté d'au moins une batterie B10 est interconnecté avec le bus de puissance M10 du micro-réseau et apte à imposer le niveau de tension et la fréquence du bus de puissance M10 dudit micro-réseau. Par conséquent, le générateur photovoltaïque V, via le convertisseur continu / alternatif C10, est connecté directement au bus de puissance M10 du micro-réseau. Selon l'invention, le bus de puissance M10 du micro-réseau est de préférence « standard », c'est-à-dire que ses caractéristiques électriques - tension, fréquence - sont conformes aux normes locales. En Europe, par exemple, ledit bus de puissance fonctionne à 230 volts sous 50 hertz. Cela permet de raccorder au bus de puissance commun des générateurs électriques divers, par l'intermédiaire de convertisseurs « standards ».

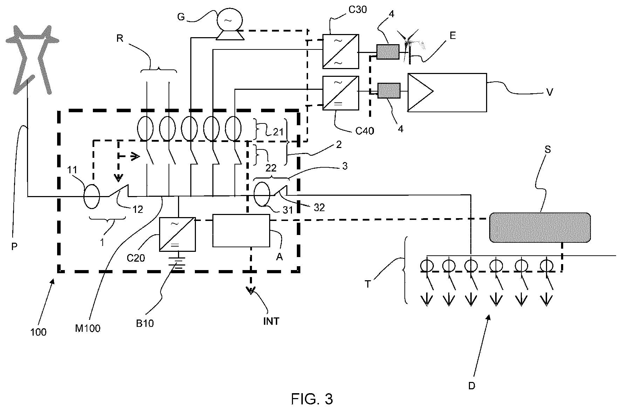

La figure 3 représente un mode de réalisation particulier de l'invention. Le système selon l'invention se présente de préférence sous la forme d'un coffret 100, comportant un capot étanche, de sorte qu'il peut aussi bien être installé en extérieur qu'en intérieur. Il s'installe a priori entre le compteur du revendeur d'énergie côté réseau public d'électricité P et le tableau de protection T comprenant les départs D vers le réseau domestique à alimenter.

Le coffret selon l'invention, correspondant à un mode de réalisation préféré du système selon l'invention, comprend :
- des premiers moyens de raccordement 1 au réseau public d'électricité ;
- des seconds moyens de raccordement 2 aux générateurs électriques, sources locales de production d'électricité : groupe électrogène G ; générateur photovoltaïque V via le convertisseur C40 ; générateur éolien E via le convertisseur C30, réserves R, turbine hydraulique ...etc. ;
- des moyens de raccordement 3 au tableau de protection T ;
- un onduleur-chargeur ou convertisseur réversible C20 associé à la au moins une batterie B10 ;
- un automate A de gestion du système contrôlant les modes de fonctionnement du système et la communication vers un réseau interne et/ou externe, par des moyens filaires ou non filaires INT ;
ainsi que, préférentiellement :
- des systèmes de mesure et de contrôle 21, 22 de chaque ligne issue des différentes sources locales d'électricité V, E, G, R ; ces systèmes de mesure peuvent comprendre des tores de mesure ;
- des systèmes de communication avec les convertisseurs C20, C30, C40 qui le permettent et de pilotage de la production des différentes sources locales d'électricité par un système de pilotage 4 adapté.

Dans le cadre d'un déploiement, un second coffret peut être prévu notamment pour recevoir une ou plusieurs batteries supplémentaires pour augmenter la capacité de stockage.

Par ailleurs, le système selon l'invention peut comprendre un dispositif déporté S dans le tableau de protection T, en communication avec l'automate A, pour mesurer et piloter l'ensemble ou un sous-ensemble des départs D qui alimentent le réseau domestique.

Comme expliqué dans le cadre de la figure 2, l'architecture selon l'invention prévoit que via leur convertisseur standard respectif, les différents sources locales d'électricité sont reliées directement au bus de puissance M10/M100 commun du micro-réseau.

Dans l'exemple de la figure 3, le bus de puissance M100 du micro-réseau est interconnecté avec le réseau public d'électricité P. S'il est disponible, c'est ledit réseau public d'électricité P qui impose le niveau de tension et la fréquence du bus de puissance M100. En cas d'absence du réseau public P, c'est le convertisseur réversible C20 associé à la au moins une batterie B10 qui impose le niveau de tension et la fréquence du bus de puissance M100 commun du micro-réseau.

Comme on l'a vu, le système selon l'invention est de préférence équipé, par l'intermédiaire de l'automate A, de moyens de communication INT pour être raccordé à un réseau de communication local et / ou international, via Ethernet ou GSM par exemple.

L'automate A permet ainsi de relever et de rendre accessibles tous les paramètres mesurés, notamment par les systèmes de mesure et de contrôle 21, 22 ou les dispositifs de pilotage 4.

Les principes cinématiques du système selon l'invention sont ci-après décrits sur la base de l'exemple de mode de réalisation de la figure 3. Ces principes restent néanmoins valables quel que soit le mode de réalisation, et notamment quel que soit le mode de raccordement au réseau public ou au réseau domestique consommateur.

En fonctionnement nominal de base, le bus de puissance M100 du micro-réseau étant raccordé au réseau public P, la production électrique par des sources à énergie renouvelable, générateur photovoltaïque V, éolien E, fluctue normalement en fonction des conditions climatiques. La génération conventionnelle par des groupes électrogènes G n'est pas utilisée. La au moins une batterie B10 est chargée ou en charge.

Dans le cas d'un raccordement favorisant l'autoconsommation, l'énergie transite depuis le réseau public P vers le réseau domestique d'un bâtiment si la production est inférieure à la consommation. Dans le cas contraire, le surplus d'énergie est retourné au réseau public P. La production locale peut le cas échéant être nulle ou inexistante. Par l'intermédiaire de tores de mesure, l'automate A capte les mesures de quantité et de qualité d'énergie produite par chaque source V, E, P, dont le réseau public P, et chaque charge pilotable. Grâce à cette information, il est donc possible de déconnecter un système défaillant ou de gérer au mieux les flux d'énergie, en tenant compte de paramètres de priorité au choix de l'utilisateur, de l'état de charge de la au moins une batterie B10 ...etc. L'automate A peut par ailleurs adapter la vitesse de charge de la au moins une batterie B10 en fonction de l'énergie électrique disponible.

Dans le cas où il ne serait pas autorisé d'envoyer un éventuel surplus d'énergie sur le réseau public P, le système selon l'invention peut stocker ledit surplus dans la au moins une batterie B10 ou, si leur capacité maximale est atteinte, stopper une à une, par l'intermédiaire de commandes envoyées par l'automate A, les sources locales d'électricité V, E, R, G en les déconnectant du bus de puissance M100 du micro-réseau par action au niveau des moyens de raccordement 2 de façon à garder la somme des productions inférieure ou égale à la consommation globale du réseau domestique.

Dans le cas d'une demande du réseau public P de limiter la puissance appelée, le système selon l'invention connaît trois fonctionnements possibles. Il peut délester certaines charges par l'intermédiaire d'un dispositif déporté S dans le tableau de protection T, démarrer des sources locales de production d'électricité non intermittentes, telles que des groupes électrogènes G, ou encore injecter de l'énergie depuis la au moins une batterie B10.

L'ordre de limiter la puissance appelée au réseau peut par ailleurs être introduit localement au travers d'une interface locale ou parvenir de l'extérieur au travers des moyens de communication INT.

Dans le cas d'une demande du réseau domestique d'injecter de l'énergie, le système selon l'invention est apte à mettre en oeuvre les mêmes scénarios que dans le cas précédent : délestage de certaines charges, démarrage de sources G non intermittentes, injection d'énergie à partir de la au moins une batterie B10.

Dans le cas d'une coupure intermittente du réseau public P ou si le micro-réseau n'est pas raccordé audit réseau public de façon permanente, le système est chargé de réaliser l'équilibre électrique du micro-réseau en délestant des charges en fonction de l'énergie disponible et en utilisant le convertisseur réversible C20 doté d'au moins une batterie B10 pour, comme on l'a vu précédemment, conditionner en tension et en fréquence le bus de puissance M100 du micro-réseau. Cela constitue une caractéristique essentielle de la présente invention.

Le système selon l'invention prévoit de manière avantageuse la possibilité de contrôler les sources locales de production d'électricité V, E, R, G. Il réalise l'équilibre en tension et fréquence du bus de puissance M100 du micro-réseau local en maîtrisant le délestage de charges, notamment, le cas échéant, grâce à un système déporté S dans le tableau de protection T, et le contrôle de la production. Chaque ligne de production issue des sources locales V, E, R, G est dotée d'un organe de coupure 21 et d'un organe de mesure 22 supervisés par l'automate A. De même, de préférence, chaque ligne de consommation D, via le tableau de protection T, le système déporté S de mesure et de contrôle et des moyens de communication adaptés est également supervisée par l'automate A. Cela permet à l'automate A de gérer, via un algorithme adapté, l'équilibre production-consommation qui se traduit par un maintien de la tension et de la fréquence du bus de puissance M100 commun du micro-réseau.

En résumé, le système selon l'invention présente différents avantages majeurs par rapport à l'état de la technique. Il permet de réaliser des fonctions de gestion des charges d'un réseau domestique à alimenter, de gestion des sources d'énergie, notamment locales, et, le cas échéant, de communication avec un système d'information du réseau domestique et / ou un système de supervision.

Le système selon l'invention assure l'approvisionnement énergétique d'un réseau domestique de charge grâce en particulier à la au moins une batterie B10 et aux moyens de production locaux renouvelables V, E, ou conventionnels G.

Par ailleurs, l'architecture du système selon l'invention est ouverte à tout convertisseur standard qui se raccorde normalement sur le réseau public. Elle permet un interfaçage aisé de la solution selon l'invention avec des systèmes présents antérieurement, ainsi que des évolutions a posteriori de l'installation, notamment par le raccordement de nouvelles sources locales ou de nouvelles charges à gérer.

## Revendications

1. Système de multiplexage d'énergie électrique issue d'une pluralité de générateurs électriques (V,E,G,R), ledit système étant interconnecté avec un réseau public d'électricité (P) et comprenant un convertisseur réversible (C20) connecté à au moins une batterie (B10), ledit convertisseur réversible (C20) étant directement interconnecté avec un bus de puissance (M100) commun et chacun desdits générateurs électriques (V,E,G,R) étant connecté audit bus de puissance (M100) commun au travers d'un organe de coupure (21) et d'un organe de mesure (22), respectivement via un convertisseur (C30,C40) adéquat, le bus de puissance (M100) commun, la pluralité de générateurs électriques (V,E,G,R) et le convertisseur réversible (C20) formant un micro-réseau alimentant un réseau domestique consommateur d'énergie électrique, le système comprenant également un automate de gestion (A),
**caractérisé en ce qu'**il comprend des moyens adaptés pour que :
• en cas de disponibilité du réseau public d'électricité (P), le niveau de tension et la fréquence du bus de puissance (M100) commun du micro-réseau sont fixés par ledit réseau public d'électricité (P) comme étant égaux au niveau de tension et à la fréquence de l'énergie électrique issue du réseau public d'électricité (P) ;
• en cas d'indisponibilité du réseau public d'électricité (P), le niveau de tension et la fréquence du bus de puissance (M100) commun du micro-réseau sont fixés par ledit convertisseur réversible (C20) connecté à la au moins une batterie (B10), et l'automate (A) contrôle les organes de coupure (21) et les organes de mesure (22) des générateurs électriques (V,E,G,R) de façon à maintenir la tension et la fréquence du bus de puissance (M100) commun.

2. Système selon la revendication 1, **caractérisé en ce que** la au moins une batterie (B10), via ledit convertisseur réversible (C20), est apte à injecter de l'énergie électrique sur le réseau public d'électricité (P).

3. Système selon l'une des revendications précédentes, **caractérisé en ce que** le bus de puissance (M100) commun présente des caractéristiques électriques standards conformes aux normes locales.

4. Système selon l'une des revendications précédentes, raccordé à un réseau domestique consommateur d'énergie électrique par l'intermédiaire d'un tableau de protection électrique (T).

5. Système selon la revendication 4, **caractérisé en ce qu'**il comporte un organe déporté (S) de mesure et de contrôle situé au niveau du tableau de protection électrique (T), pour mesurer et communiquer à l'automate (A) la consommation requise par le réseau domestique.

6. Coffret comprenant :
• des premiers moyens de raccordement (1) au réseau public d'électricité (P) ;
• des seconds moyens de raccordement (2) à une pluralité de générateurs électriques (V,E,G,R) ;
• des troisièmes moyens de raccordement (3) à un tableau de protection électrique (T) alimentant un réseau domestique consommateur d'énergie électrique ;
• un convertisseur réversible (C20) doté d'au moins une batterie (B10);
• un bus de puissance (M100) commun interconnecté avec les premiers, seconds et troisièmes moyens de raccordement (1,2,3), et avec le convertisseur réversible (C20) ;
• un automate (A) connecté audit convertisseur réversible (C20) et aux générateurs électriques (V,E,G,R), et comprenant des moyens de communications (INT) avec l'extérieur ;
**caractérisé en ce qu'**il comprend des moyens adaptés pour mettre en oeuvre le système selon l'une des revendications 1 à 5.

7. Coffret selon la revendication 6, comprenant un capot étanche pour protéger les premiers, seconds et troisièmes moyens de raccordement (1,2,3), le convertisseur réversible (C20) doté d'au moins une batterie (B10) et l'automate (A).

8. Ensemble de coffrets conformes à l'une des revendications 6 à 7, lesdits coffrets étant installés en série.

## Patentansprüche

1. System zum Multiplexen elektrischer Energie aus mehreren elektrischen Generatoren (V, E, G, R), wobei das System mit einem öffentlichen Stromnetzwerk (P) verbunden ist und einen umkehrbaren Wandler (C20) umfasst, der mit mindestens einer Batterie (B10) verbunden ist, wobei der umkehrbare Wandler (C20) direkt mit einem gemeinsamen Leistungsbus (M100) verbunden ist und jeder der elektrischen Generatoren (V, E, G, R) über ein Unterbrechungsorgan (21) und ein Messorgan (22), beziehungsweise über einen geeigneten Wandler (C30, C40), mit dem gemeinsamen Leistungsbus (M100) verbunden ist, wobei der gemeinsame Leistungsbus (M100), die mehreren elektrischen Generatoren (V, E, G, R) und der umkehrbare Wandler (C20) ein Mikronetzwerk bilden, das ein Hausnetzwerk versorgt, das elektrische Energie verbraucht, wobei das System ebenso eine Verwaltungssteuerung (A) umfasst,
**dadurch gekennzeichnet, dass** es Mittel umfasst, die angepasst sind, damit:
• bei Verfügbarkeit des öffentlichen Stromnetzwerks (P) der Spannungspegel und die Frequenz des gemeinsamen Leistungsbusses (M100) des Mikronetzwerks durch das öffentliche Stromnetzwerk (P) als gleich dem Spannungspegel und der Frequenz der elektrischen Energie aus dem öffentlichen Stromnetzwerk (P) festgelegt werden;
• bei Nichtverfügbarkeit des öffentlichen Stromnetzwerks (P) der Spannungspegel und die Frequenz des gemeinsamen Leistungsbusses (M100) des Mikronetzwerks durch den umkehrbaren Wandler (C20) festgelegt werden, der mit der mindestens einen Batterie (B10) verbunden ist, und die Steuerung (A) die Unterbrechungsorgane (21) und die Messorgane (22) der elektrischen Generatoren (V, E, G, R) steuert, um die Spannung und die Frequenz des gemeinsamen Leistungsbusses (M100) zu halten.

2. System nach Anspruch 1, **dadurch gekennzeichnet, dass** die mindestens eine Batterie (B10) über den umkehrbaren Wandler (C20) in der Lage ist, elektrische Energie in das öffentliche Stromnetzwerk (P) einzuspeisen.

3. System nach einem der vorhergehenden Ansprüche, **dadurch gekennzeichnet, dass** der gemeinsame Leistungsbus (M100) elektrische Standardeigenschaften aufweist, die den örtlichen Normen entsprechen.

4. System nach einem der vorhergehenden Ansprüche, das mittels einer Schutzschaltertafel (T) mit einem Hausnetzwerk verbunden ist, das elektrische Energie verbraucht.

5. System nach Anspruch 4, **dadurch gekennzeichnet, dass** es ein versetztes Mess- und Prüforgan (S) aufweist, das an der Schutzschaltertafel (T) befindlich ist, um den von dem Hausnetzwerk benötigten Verbrauch zu messen und an die Steuerung (A) zu übermitteln.

6. Schaltkastengehäuse, umfassend:
• erste Mittel zum Anschließen (1) an das öffentliche Stromnetzwerk (P);
• zweite Mittel zum Anschließen (2) an mehrere elektrische Generatoren (V, E, G, R);
• dritte Mittel zum Anschließen (3) an eine Schutzschaltertafel (T), die ein Hausnetzwerk versorgt, das elektrische Energie verbraucht;
• einen umkehrbaren Wandler (C20), der mit mindestens einer Batterie (B10) versehen ist;
• einen gemeinsamen Leistungsbus (M100), der mit den ersten, zweiten und dritten Mitteln zum Anschließen (1, 2, 3) und mit dem umkehrbaren Wandler (C20) verbunden ist;
• eine Steuerung (A), die mit dem umkehrbaren Wandler (C20) und den elektrischen Generatoren (V, E, G, R) verbunden ist und Mittel zur Kommunikation (INT) mit dem Außenraum umfasst;
**dadurch gekennzeichnet, dass** er Mittel umfasst, die angepasst sind, das System nach einem der Ansprüche 1 bis 5 umzusetzen.

7. Schaltkastengehäuse nach Anspruch 6, umfassend eine dichte Abdeckung, um die ersten, zweiten und dritten Mittel zum Anschließen (1, 2, 3), den umkehrbaren Wandler (C20), der mit mindestens einer Batterie (B10) versehen ist, und die Steuerung (A) zu schützen.

8. Einheit von Schaltkastengehäusen nach einem der Ansprüche 6 bis 7, wobei die Kästen in Reihe installiert sind.

## Claims

1. System for multiplexing electric power originating from a plurality of electric generators (V,E,G,R), said system being interconnected with a public electricity network (P) and comprising a reversible converter (C20) connected to at least one battery (B10), said reversible converter (C20) being directly interconnected with a shared power bus (M100) and each of said electric generators (V,E,G,R) being connected to said shared power bus (M100) by means of a switching unit (21) and of a measuring unit (22) via a suitable converter (C30,C40), respectively, the shared power bus (M100), the plurality of electric generators (V,E,G,R) and the reversible converter (C20) forming a micro-network supplying power to an electric power-consuming domestic network, the system also comprising a management controller (A),
**characterized in that** it comprises means designed such that:
• if the public electricity network (P) is available, the voltage level and the frequency of the shared power bus (M100) of the micro-network are set by said public electricity network (P) so as to be equal to the voltage level and to the frequency of the electric power originating from the public electricity network (P);
• if the public electricity network (P) is unavailable, the voltage level and the frequency of the shared power bus (M100) of the micro-network are set by said reversible converter (C20) connected to the at least one battery (B10), and the controller (A) monitors the switching units (21) and the measuring units (22) of the electric generators (V,E,G,R) so as to maintain the voltage and the frequency of the shared power bus (M100).

2. System according to Claim 1, **characterized in that** the at least one battery (B10) is able, via said reversible converter (C20), to inject electric power into the public electricity network (P).

3. System according to either of the preceding claims, **characterized in that** the shared power bus (M100) has standard electrical features compliant with the local regulations.

4. System according to one of the preceding claims, connected to an electric power-consuming domestic network by means of an electrical protection board (T).

5. System according to Claim 4, **characterized in that** it includes a remote measuring and monitoring unit (S) situated at the electrical protection board (T), for measuring and communicating the consumption required by the domestic network to the controller (A).

6. Panel comprising:
• first means (1) for connecting to the public electricity network (P);
• second means (2) for connecting to a plurality of electric generators (V,E,G,R);
• third means (3) for connecting to an electrical protection board (T) supplying power to an electric power-consuming domestic network;
• a reversible converter (C20) equipped with at least one battery (B10);
• a shared power bus (M100) interconnected with the first, second and third connection means (1,2,3), and with the reversible converter (C20);
• a controller (A) connected to said reversible converter (C20) and to the electric generators (V,E,G,R), and comprising means (INT) for communicating with the outside;
**characterized in that** it comprises means designed to implement the system according to one of Claims 1 to 5.

7. Panel according to Claim 6, comprising a sealed cover for protecting the first, second and third connection means (1,2,3), the reversible converter (C20) equipped with at least one battery (B10) and the controller (A).

8. Set of panels according to either of Claims 6 and 7, said panels being installed in series.
